Europäisches Patentamt

European Patent Office

Office européen des brevets

(11) Veröffentlichungsnummer: **0 003 781**
B1

(12) **EUROPÄISCHE PATENTSCHRIFT**

(21) Anmeldenummer: 79100384.1

(22) Anmeldetag: **09.02.79**

(51) Int. Cl.³: **B 23 K 9/12**

(54) **Schweissbrenner zum Lichtbogenschweissen mit abschmelzender Elektrode**

(30) Priorität: **23.02.78 DE 2807686**

(43) Veröffentlichungstag der Anmeldung:
**05.09.79 Patentblatt 79/18**

(45) Bekanntmachung des Hinweises auf die Patenterteilung:
**23.07.80 Patentblatt 80/15**

(84) Benannte Vertragsstaaten:
**BE CH FR GB IT NL SE**

(56) Entgegenhaltungen:
**CH - A - 428 027**
**DE - B - 1 210 961**
**DE - C - 937 906**
**US - A - 2 606 988**

(73) Patentinhaber: **Messer Griesheim GMBH**
**Patentabteilung Hanauer Landstrasse 330**
**D - 6000 Frankfurt**
**Main (DE)**

(72) Erfinder: **Auer, Rupert**
**Kleiststrasse 10**
**D - 8057 Eching (DE)**

Schweißbrenner zum Lichtbogenschweißen mit abschmelzender Elektrode

Die vorliegende Erfindung betrifft einen Schweißbrenner zum Lichtbogenschweißen mit abschmelzender Elektrode mit einem Spannzangengehäuse mit zugeordneter Spannzange für ein gewindeloses Kontaktrohr.

Mit diesem Oberbegriff wird auf einen Stand der Technik Bezug genommen, wie er beispielsweise bei Schweissbrennern aus der DE-OS 19 24 002 bekanntgeworden ist. Bei dem bekannten Brenner ist das gewindelose Kontaktrohr aus einem Rundmaterial hergestellt und von einer Spannzange umgeben, die ihrerseits mit einem Spannzangengehäuse in mechanischer Wirkverbindung steht. Dabei ist das Spannzangengehäuse mechanisch fest mit der Schutzgasdüse verbunden, welche wiederum über ein Gewinde mit dem Schweißbrennerrüsselende verbunden ist. Zwischen Rüsselende und Spannzangengehäuse ist die genannte Spannzange vorgesehen. Eine Spannung des Kontaktrohres wird dadurch erreicht, daß durch Drehen der Schutzgasdüse die Spannzange gegen das Rüsselende gedrückt und damit gegen das Kontaktrohr gepresst und dieses damit festgespannt wird. Von Vorteil bei dieser Anordnung ist das gewindelose Kontaktrohr, welches in bezug auf die Herstellung sowie auf die Auswechselbarkeit gegenüber Kontaktrohren mit Gewinde erhebliche Vorteile aufweist. Von Nachteil ist jedoch einerseits die komplizierte Zuordnung des Spannzangengehäuses zur Schutzgasdüse sowie die Wärmeableitung von dem Kontaktrohr. Bei dem bekannten Brenner erfolgt eine Berührung zwischen Kontaktrohr und Spannzange nur auf wenigen Umfangslinien von Zange und Rohr, so daß nur über diese Berühungslinien eine Ableitung der im Kontaktrohr aufgenommenen Wärme an das gekühlte Brennerrüsselende erfolgen kann.

Aufgabe der vorliegenden Erfindung ist es, die o.g. Nachteile zu vermeiden und einen Schweißbrenner der eingangs genannten Art zu schaffen, bei dem einerseits in einfachster Art und Weise ein Lösen bzw. Befestigen des Kontaktrohres erfolgen kann und bei dem andererseits die vom Kontaktrohr aufgenommene Wärmemenge in kürzester Zeit an das gekühlte Brennerrüsselende abführbar ist.

Zur Lösung dieser Aufgabe wird gemäß der Erfindung vorgeschlagen, daß das Kontaktrohr als Vieleckprofilrohr ausgebildet ist, und daß die Spannzange eine das Kontaktrohr entsprechend umfassende Vieleckprofilöffnung aufweist sowie über ein Gewinde im Spannzangengehäuse festklemmbar ist. Durch die vorgeschlagene Vieleckprofilrohrausbildung wird in Verbindung mit der entsprechend ausgebildeten Spannzange erreicht, daß diese auf einer großen Umfangsfläche an dem Kontaktrohr anliegt, so daß die vom Kontaktrohr aufgenommene Wärmemenge über eine größere Fläche als bei runden Spannzangen an die übrigen Brennerteile übertragen werden kann. Darüber hinaus wird durch die vorgesehene Gewindebefestigung der Spannzange im Spannzangenglhäuse es in Verbindung mit dem Vieleckprofilrohr möglich, die Spannzange und damit das Kontaktrohr in einfachster Art und Weise zu arretieren bzw. zu lösen. So ist es durch die Erfindung möglich geworden, durch Ansetzen eines entsprechend dem Vieleckprofilrohr ausgebildeten Schlüssels am Kontaktrohr selbst dieses in die jeweilige Richtung zu drehen, wodurch in Verbindung mit dem Gewinde die Spannzange in Gehäuse festgeklemmt bzw. gelöst und entsprechend auch das Kontaktrohr festgeklemmt bzw. gelöst wird. Bevorzugt wird hierzu vorgeschlagen, daß das Vieleckprofil ein Sechskantprofil ist. Dadurch wird es in vorteilhafter Weise möglich, einem handelsüblichen Sechskantschlüssel zum Lösen bzw. Befestigen des Kontaktrohres zu verwenden. Dabei ist im Hinblick auf das möglich gewordene Ansetzen des Schlüssels am Kontaktrohranfang beim Kontaktrohrwechsel ein Lösen bzw. eine Abnahme der Schutzgasdüse vom Brennerrüssel nicht mehr erforderlich.

In den Zeichnungen ist ein bevorzugtes Ausführungsbeispiel nach der Erfindung dargestellt. Es veranschaulicht

Fig. 1 einen Schutzgasbrenner in schematischer Darstellung,

Fig. 2 die Einzelheit A nach Fig. 1 in Schnittdarstellung

Fig. 3 einen Schnitt längs der Linie B—B in Fig. 2.

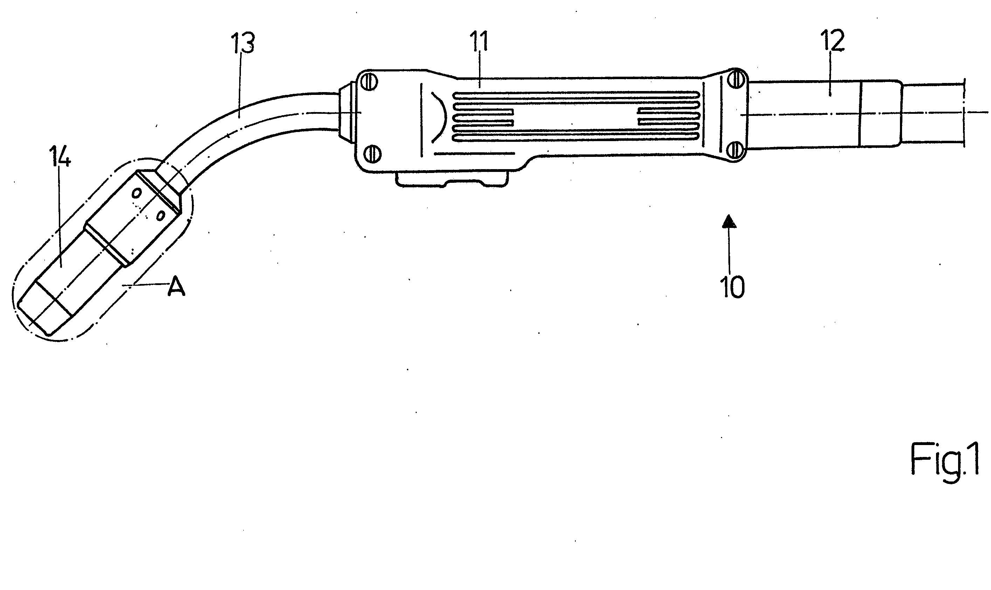

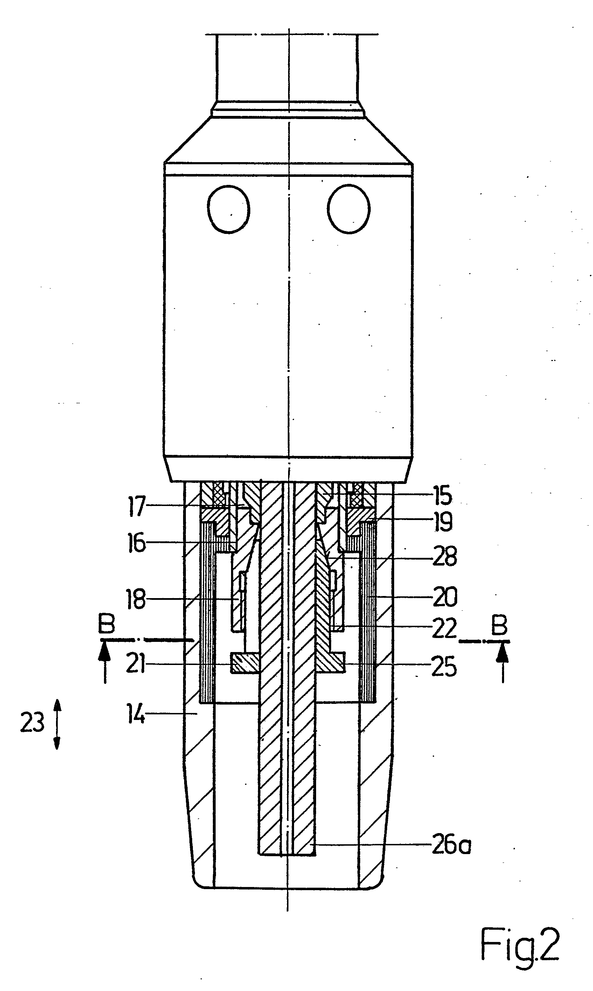

In Fig. 1 ist der Schweissbrenner zum Lichtbogenschweißen mit abschmelzender Elektrode in seiner Gesamtheit mit 10 bezeichnet. Der Brenner 10 weist einen aus zwei Halbschalen bestehenden Handgriff 11 auf, an dessen einem Ende ein Schlauchpaket 12 und an dessen anderem Ende ein Brennerrüssel 13 befestigt ist. Am Ende des Brennerrüssels 13 ist eine Schutzgasdüse 14 angeordnet. Wie aus Fig. 2 hervorgeht, enden am Rüsselende drei konzentrische Rohre 15, 16, die einerseits zur Strom- und Gasführung sowie zur Bildung eines Kühlmittelzwangskreislaufes 17 dienen. Die Stirnseiten der Rohre 15 und 16 sind mit einem darin eingelöteten Spannzangengehäuse 18 mechanisch fest verbunden. Eine elektrische Verbindung zwischen den Rohren 15 und 16 und der Schutzgasdüse 14 wird u.a. durch die Isolierungen 19 und 20 vermieden.

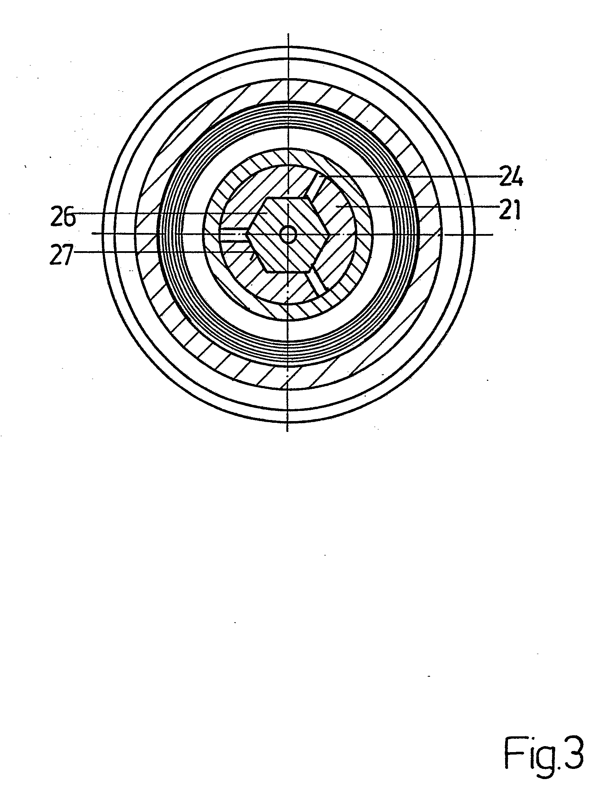

Gemäß der vorliegenden Erfindung ist in dem Spannzangengehäuse 18 eine Spannzange 21 über ein Gewinde 22 in Doppelpfeilrichtung 23 verschiebbar gelagert. Wie aus Fig. 3 hervorgeht, weist die Spannzange 21 drei oder mehr Gasschlitze 24 auf, die am Bund 25 der Spannzange 21 enden. Das Kontaktrohr ist mit 26 bezeichnet und als Vieleckprofilrohr vorzugsweise als Sechseckprofilrohr (s. Fig. 3) ausgebildet.

Die Spannzange weist eine entsprechende Vieleckprofilöffnung 27 auf, welche beim Ausführungsbeispiel entsprechend dem Sechskantprofil ebenfalls als Sechskantöffnung ausgebildet ist. Diese Vieleckausbildung bewirkt, wie insbesondere Fig. 3 zeigt, eine größere Wärmeübergangsfläche zwischen Kontaktrohr und Spannzange.

Zum Lösen bzw. Befestigen eines Vieleckprofilkontaktrohres innerhalb des Brenners ist es lediglich erforderlich, das Vieleckprofilrohr in die Vieleckprofilöffnung einzuschieben und dann das Rohr und damit die Spannzange 21 in Spannrichtung zu drehen, so daß über die an Spannzange und Spanngehäuse vorgesehene Konusfläche 28 eine Spannung von Gehäuse, Spannzange und Kontaktrohr erfolgt. Wie bereits oben ausgeführt, kann dabei das Ansetzen des Spannschlüssels (Sechskantmaulschlüssel oder Ringschlüssel) in einfachster Art und Weise am Ende 26 a des Kontaktrohres erfolgen, wodurch einerseits ein Lösen der Schutzgasdüse 14 von dem Brenner nicht erforderlich ist, und zum anderen die mechanische Beanspruchung der Spannzange 25 durch das nicht notwendige Ansetzen eines Schlüssels erheblich vermindert wird.

**Patentansprüche**

1. Schweißbrenner zum Lichtbogenschweißen mit abschmelzender Elektrode mit einem Spannzangengehäuse mit Spannzange für ein gewindeloses Kontaktrohr, dadurch gekennzeichnet, daß das Kontaktrohr (26) als Vieleckprofilrohr ausgebildet ist, und daß die Spannzange (21) eine das Kontaktrohr (26) entsprechend umfassende Vieleckprofilöffnung (27) aufweist sowie über ein Gewinde (22) im Spannzangengehäuse (18) festklemmbar ist.

2. Schweißbrenner nach Anspruch 1, dadurch gekennzeichnet, daß das Vieleckprofil (26) ein Sechskantprofil ist.

**Claims**

1. Welding torch (10) for arc welding with a consumable welding electrode comprising a collet housing (18) and a collet (21) for a threadless contact tube (26), characterised in that the contact tube (26) having an external polygonal contour and that the collet (21) having an interial contour matching the external polygonal contour (27) of the contact tube (26) and a thread (22) for clamping the collet (21) and the contact tube (26) within the collet housing (18).

2. Welding torch as claimed in claim 1, characterised in that the polygonal contour (26) is a hexagonal contour.

**Revendications**

1. Torche pour le soudage électrique à l'arc avec électrode fusible avec un support de pince de serrage, avec pince de serrage pour un tube de contact sans filet, caractérisé en ce que le tube de contact (26) est conçu en tant que tube profilé polygonal et que la pince de serrage (21) dispose d'une ouverture profilée polygonale (27) proportionnée de manière à recevoir le tube de contact (26), ainsi qu'elle peut être serrée par l'intermédiaire d'un filet (22) dans le support de pince de serrage (18).

2. Torche de soudage selon revendication 1, caractérisée en ce que le profilé polygonal (26) est un profilé hexagonal.

14    13    11    12

A

10

0 003 781

Fig.1

0 003 781

Fig.2

Fig.3